# EUROPEAN PATENT SPECIFICATION

(11) **EP 1 548 681 B1**
(45) Date of publication and mention of the grant of the patent: **26.09.2007**
(21) Application number: 04030262.2
(22) Date of filing: 21.12.2004
(51) Int. Cl.: G08G 1/0967, G09B 29/10

(54) **Information distribution apparatus and information distribution method**
Informationsverteilungsvorrichtung und -verfahren
Appareil et procédé de distribution d'informations

(30) Priority: 22.12.2003 JP 2003425512
(43) Date of publication of application: 29.06.2005
(73) Proprietor: AISIN AW CO., LTD., Anjo, Aichi 444-1192 (JP)
(72) Inventor: Yamada, Kunihiro, Okazaki Aichi 444-8564 (JP); Koumura, Kaoru, Okazaki Aichi 444-8564 (JP); Ogawa, Satoshi, Okazaki Aichi 444-8564 (JP)
(74) Representative: TBK-Patent

(56) References cited:
- EP-A- 0 800 092
- DE-A1- 19 753 170
- US-A- 4 496 996
- US-B1- 6 169 956
- US-B1- 6 618 667

## Description

The present invention relates to an information distribution apparatus and a program for information distribution method.

Document EP-A-0 800 092 document discloses an information distribution system as set out in the preamble of claim 1 and a method as set out in claim 12. In particular, this document describes a terminal for guiding a vehicle, wherein a current position and a destination of the vehicle is sent to a navigation center or the like, which in turn sends a proposed route. This proposed route is stored in the terminal and is sequentially given, i.e., output to the driver after arriving at so-called support reference points which lie on the route.

A conventional navigation system is formed by connecting a navigation apparatus and an information center via a network. The conventional navigation system distributes news as information from a predetermined distribution station to the navigation apparatus via the network by using the information center as an information station. Therefore, it is possible to display news on a display screen of the navigation apparatus or output news from an audio output unit. (Refer to, for example, Japanese Unexamined Patent Application Publication No. 2001-109771).

In the conventional navigation system, for example, since a plurality kinds of news are distributed by plural distribution stations, the same news of some topics that are distributed by more than one distribution station may be downloaded in the navigation apparatus.

Hence, it is an object of the present invention to overcome the above disadvantage of the prior art.

This object is solved by an information distribution apparatus as set out in claim 1, and alternatively by a method as set out in claim 12.

Further advantageous developments are set out in the dependent claims.

Thus, various exemplary embodiments of this invention provide an information distribution apparatus and information distribution program to avoid downloading the same news from more than one distribution station.

Exemplary embodiments of the invention will now be described with reference to the accompanying drawings, wherein:

FIG. 1 is a block diagram of the navigation system according to a first exemplary embodiment of the invention;

FIG. 2 is a block diagram of the navigation apparatus according to the first exemplary embodiment of the invention;

FIG. 3 is a flow chart showing an information distribution method according to the first exemplary embodiment of the invention;

FIG. 4 is a diagram showing the news distribution condition according to the first exemplary embodiment of the invention;

FIG. 5 is a main flow chart distribution method according to the first exemplary embodiment of the invention;

FIG. 6 is a diagram showing an information comparison method according to the first exemplary embodiment of the invention;

FIG. 7 is a flow chart showing a reception method according to the first exemplary embodiment of the invention;

FIG. 8 is a flow chart showing an information distribution method according to a second exemplary embodiment of the invention;

FIG. 9 is a flow chart showing an information distribution method according to a third exemplary embodiment of the invention; and

FIG. 10 is a flow chart showing an information distribution method according to a forth exemplary embodiment of the invention.

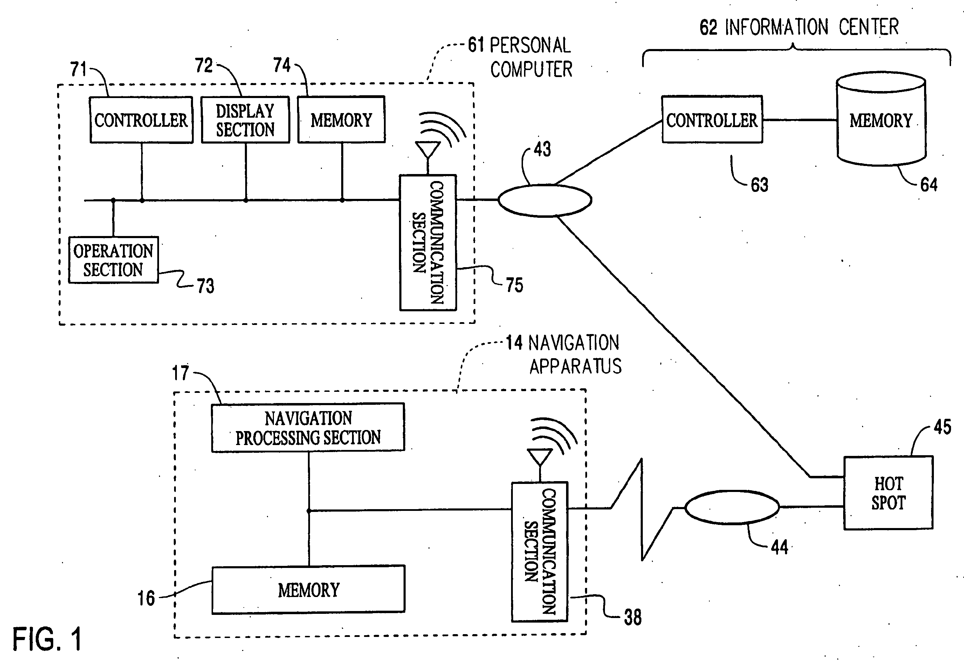

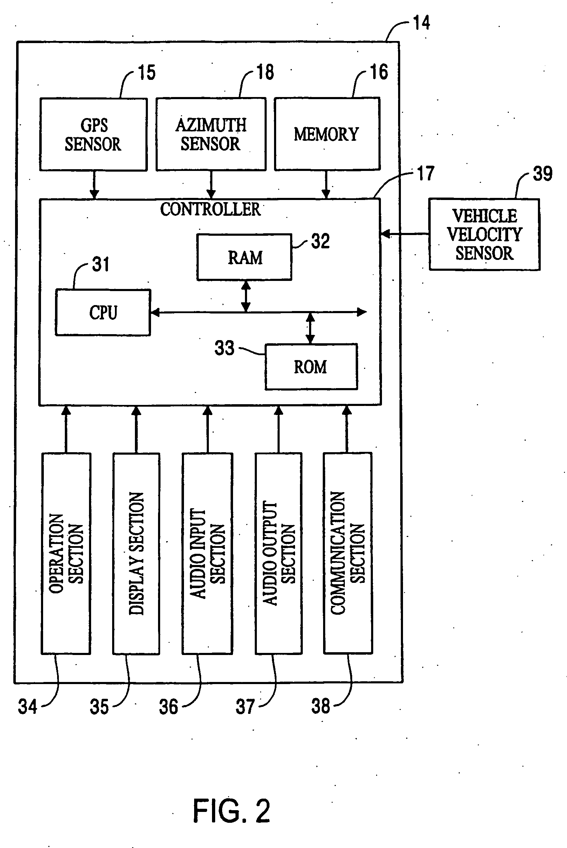

FIG. 1 shows a functional block diagram of the navigation system according to a first exemplary embodiment of the invention. FIG. 2 is a block diagram of the navigation apparatus according to the first exemplary embodiment of the invention.

As shown in Fig. 1, for example, a personal computer 61, an information center 62 and a navigation apparatus 14 are connected, for example, via a network 43.

The information center 62 may include a controller 63 and a memory 64 (such as, for example, a database) that is connected to the server 63 to record navigation data indicating navigation information. The information center 62 can provide a site for providing various kinds of information of a predetermined provider other than navigation data.

The information center 62 is capable of receiving not only traffic information including, for example, congestion information, restriction information, parking lot information, traffic accident information, and service area crowded condition that are transmitted from a traffic information transmission center as a traffic information provider, for example, VICS® (Vehicle Information and Communication System)(not shown). The information center 62 is also capable of receiving general information such as news, weather forecast and private information such as, for example, mail. The information center 62 is capable of receiving display information that can include, for example, TV programs and the like, content information such as a music program and the like. The display information and content information may be distributed from, for example, a broadcast and/or a content distribution agency as another information provider. Therefore, it is possible to send various kinds of information such as, for example, traffic information, general information, personal information, and/or content information in the form of, for example, text data, audible data, and/or display data to the personal computer 61 or the navigation apparatus 14 via the network 43, either before or after the information is recorded in the memory 64.

Furthermore, although, for example, an internet may be used as the network 43, the network 43 may be, for example, communication system including a wireless LAN or a LAN (Local Area Network), a WAN (Wide Area Network), an intranet, a portable phone system network, a telephone line network, a public communication line network, and/or a private communication network. Further, the network 43 may be, for example, a communication system using CS (Communications Satellite) broadcasting, BS (Broadcast Satellite) broadcasting, ground wave digital TV broadcasting, and/or FM multiplexed broadcasting. The network 43 may also include, for example, a communication system such as non-stop electronic toll collection system (ETC) used in intelligent transport system (ITS) and/or dedicated short-range communication (DSRC).

The controller 63 may include, for example, a CPU, a MPU (not shown) as a control unit, and may include, for example, a RAM, a ROM, a flash memory (not shown). Further, for example, a magnetic disk, such as a hard disk (not shown), may be disposed as a recording medium.

Map data for displaying a map, intersection data related to each intersection, node data related to a node point, road data related to road, search data for searching a route, and/or facility data related to various kinds of facility may be recorded as navigation data in the memory 64. Note that, data related to the road attribute, such as, for example, data representing general roads such as national roads, prefectural roads, narrow streets, data representing highway/toll roads such as express roads, urban express roads, and/or toll roads may be included in the road data.

The controller 63 may receive traffic information transmitted by, for example, the road traffic information center and receive general information. The controller 63 may record the received information in the memory 64 as primary information, statistically process the primary information, create statistical data constituting of historical information (for example, a congestion history, congestion forecast information) and record the statistical data in the memory 64 as secondary information. With respect to creating the secondary information, it is possible to add details such as, for example, date, day of the week, weather, coincidence with various kinds of events, season, and/or facility information to the historical information by referring to the received general information.

The personal computer 61 may be set at a familiar location for an operator, for example at the user's home. The personal computer may be functionally divided into, for example, a controller 71 (such as a CPU) as a control unit, a display section 72 for notifying the operator of various kinds of information, an operation section 73, a memory unit 74 as a recording section, and/or a communication section 75. The communication section 75 may contain a modem (not shown) for connecting the personal computer 61 to, for example, the information center 62 and/or an access point (not shown) for connecting the personal computer 61 to the navigation apparatus 14 via a communication section 38 by means of, for example, wireless LAN.

Although according to the present exemplary embodiment, the personal computer 61 may be a user terminal, it may also be, for example, a home server, an electronic notebook, a portable phone, a portable terminal, a PDA (personal digital assistant), a TV phone, and/or a game machine instead of the personal computer 61.

Although, according to the present exemplary embodiment, the controller 71 may be a CPU, for example, an MPU may be used instead of the CPU. As the display section 72, for example, CRT display, a liquid crystal display, and/or a plasma display may be used. Further, as an operation section 73, it is possible to use, for example, a keyboard, a mouse, a bar code reader, a remote control unit, a joy stick, a light-pen, and/or a stylus pen. The display section 72 may be made to function as an operation section by means of, for example, a touch panel formed on the display. Operational regions such as various kinds of keys, switches, buttons and the like may be formed on the display and touching the operational region may enable an input.

The memory 74 may include, for example, a RAM, a ROM, and/or a flash memory. A magnetic disc (for example, a hard disk) may also be disposed. It is also possible to use, for example, a flexible disc, magnetic tape, magnetic drum, CD-ROM, CD-R, MD, DVD, optical disc, MO, IC card, optical card, memory card or the like instead of the hard disk as an external storage unit. In conjunction with a hard disk, the recording unit 74 may include a reading unit for reading out data recorded in the hard disk and a writing unit for recording data.

The navigation apparatus 14 may be, for example, a portable terminal device and/or a vehicle on-board device mounted on a vehicle. The navigation apparatus 14 can include a controller 17, a memory 16, and/or a communication section 38. Although according to the present exemplary embodiment, the navigation apparatus 14 may be used as a portable terminal device, various kinds of terminal devices may be used (described above) instead of the navigation apparatus 14.

The hot spot 45 may be any location that allows the navigation apparatus 14 to communicate with the network 43. The hot spot 45 may be, for example, a restaurant or other public/retail facility with an access point (not shown) for forming a wireless LAN 44 connection. Thus, the navigation apparatus 14 can be connected to the network 43 by accessing to the access point. According to this exemplary embodiment, the navigation system includes, for example, one or more of the navigation apparatus 14, the network 43, the wireless LAN 44, the hot spot 45, the personal computer 61, and/or the information center 62.

Next, the navigation apparatus 14 will be described with reference to Fig. 2. The navigation apparatus 14 can include a GPS sensor 15 as a current position detector that detects a current position of the navigation apparatus 14 by receiving an electronic wave generated by an artificial satellite; a memory 16, for example, for recording various kinds of data other than the above mentioned navigation data; a controller 17, for example, for various kinds of arithmetic operation processing based on various kinds of program and data; an azimuth sensor 18, for example, for detecting a direction of the navigation apparatus 14; an operation section 34 for executing, for example, predetermined input by user's operating as a first input section; a display section 35 for executing, for example, display on a screen (not shown) to notify the user; an audio input section 36 for input by, for example, voice; an audio output section 37 for notifying the user various kinds of information by, for example, voice; and/or a communication section 38 as, for example, a transmitting-receiving section. The operation section 34, the display section 35, the audio input unit 36, the audio output unit 37, and/or the communication section 38 may be connected to the controller 17. Further, a vehicle speed sensor 39 may also be connected to the controller 17.

As a recording medium, for example, a hard disk may be disposed in the memory 16. Note that, the external recording devices described above may be used as a recording medium instead of the hard disk. Further, the reading unit and the writing unit described above may be disposed in the data recording section 16 in conjunction with the hard disk.

The controller 17 may include a CPU 31 which works as a control unit, for example, controlling the navigation apparatus 14, a RAM 32, for example, a DRAM, SRAM, MRAM, and FeRAM, which may be used as a working memory for the CPU 31, a ROM 33 that can record various kinds of programs, and a flash memory (not shown).

Although the ROM 33 can record various kinds of program while the memory 16 records various kinds of programs and data, the memory 16 can also record the programs and data. In this case, the programs and data can be read out from the memory 16 and written into the flash memory. Therefore, the program and data can be updated by replacing, for example, the memory (e.g., a hard disk). If an automatic transmission control unit for controlling an automatic transmission (not shown) loaded on a vehicle is installed, the memory can also record the programs and data for controlling the automatic transmission control unit. Further, the program and data can be received via the communication section 38 to be written into the flash memory.

A microphone, for example, can be used as the audio input section 36. The audio output section 37 may include a voice synthesizer and a speaker. Information may be output with voice synthesized by the voice synthesizer. Note that, it is possible to output not only voice synthesized by the voice synthesizer but also various kinds of sound and information recorded in advance in a tape, memory or the like.

The communication section 38 may include a beacon receiver for receiving various kinds of information from the traffic information transmission center in the form of, for example, electric wave beacon and/or light beacon via, for example, an electric wave beacon unit and/or a light beacon unit disposed along a road. The communication section 38 may also include an FM receiver for receiving FM multiplexed broadcasting via FM broadcasting station. Thus, the beacon receiver can receive traffic information and the FM receiver can receive the traffic information as well as general information as FM multiplexed information.

Further, the communication section 38 may obtain, for example, traffic information and/or general information via, for example, the network 43 and/or the information center 62, as well as access to a web page of a content provider via, for example, internet by using the information center 62 as an information station to obtain, for example, personal information and/or content information. In this case, the communication section 38 may be connected with the information center 62 via, for example, an access point (not shown), and/or an internet. Note that, the communication section 38 may function as a current position detecting section and can detect a current position by receiving position information based on, for example, electric wave beacons and/or light beacons.

The navigation apparatus 14 and the personal computer 61 may be connected to each other by wireless LAN which enables bi-directional communication. For that purpose, the communication section 75 may be provided with access points as described above. Slots (not shown), such as, for example, PCMCIA slot and/or PC card slot may be formed in the communication section 38, so that a radio card is inserted into the slot. Although according to the present exemplary embodiment, the navigation apparatus 14 and the personal computer 61 are connected to each other by wireless LAN, according to various other exemplary embodiments, the navigation apparatus 14 and the personal computer 61 may be connected by wired LAN. According to those embodiments, the communication section 75 may be provided with, for example, hubs (not shown), so that the hubs and the communication section 38 are coupled detachably by a cable.

Note that the CPU 31, the controller 71, the personal computer 61, the controller 63, a server of a provider, and/or the controller 17 work independently or are combined to function as a computer based on, for example, predetermined programs and data.

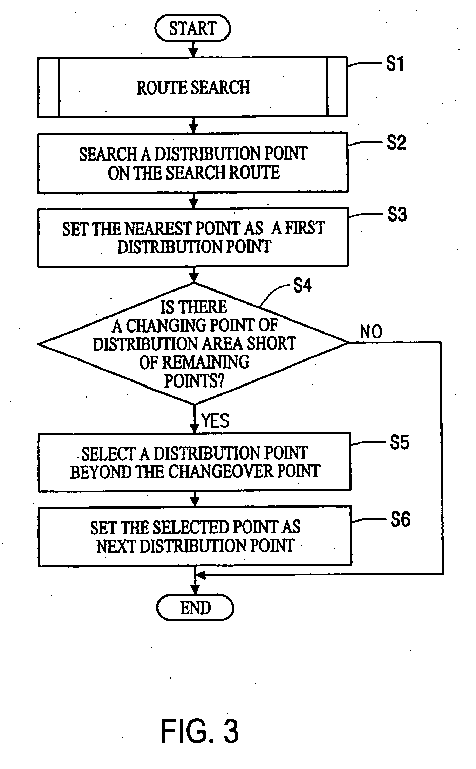

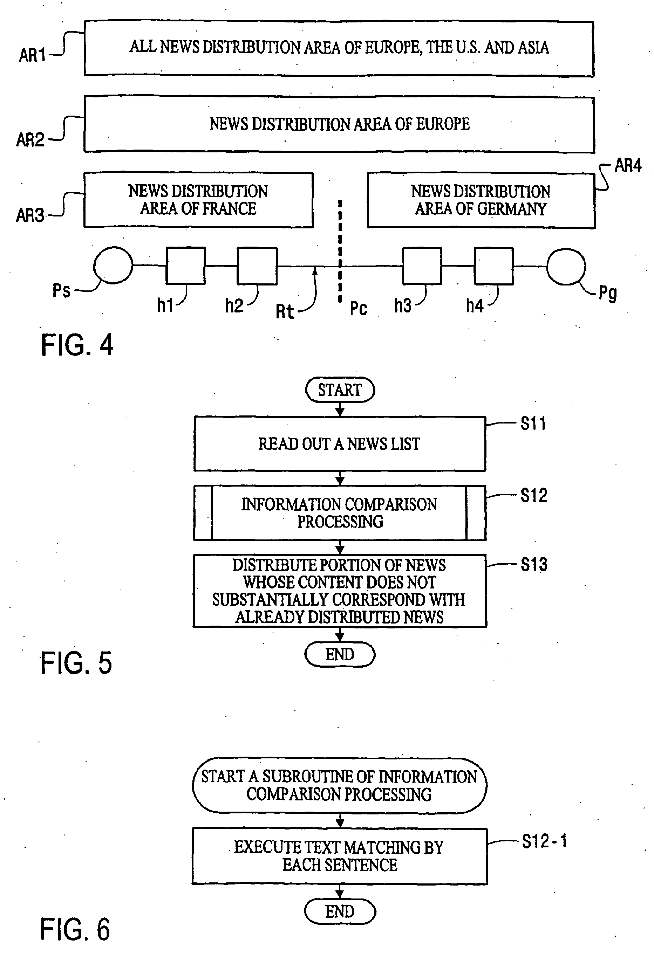

Next, the operation of the navigation system having the above-described structure will be described with reference to Figs. 3 and 4. For the purpose of this example, it is assumed that the navigation system is distributing the news as information. FIG. 3 is a flow chart of an information distribution method according to the first exemplary embodiment of the invention. FIG. 4 is a diagram showing the news distribution condition according to the first exemplary embodiment of the invention.

First, if an operator inputs a departure point Ps and a target destination Pg by operating the operation section 34 of the navigation apparatus 14 (FIG. 2), the CPU 31 searches for a route, in which the departure point Ps and target destination Pg, for example, are set as the search condition, and the search condition is transmitted to the information center 62 (FIG. 1).

The search condition is received by a communication section (not shown) in the information center 62, and the controller 63 reads out the search data and the statistical data by referring to the memory 64, and reads traffic information transmitted by the traffic information transmission center so as to obtain information necessary for searching a route. Subsequently, the controller 63 searches for a route based on, for example, search data, traffic information, and/or statistical data according to the search condition.

Since the navigation apparatus 14 may include the communication section 38, it is possible to access the wireless LAN 44 via access points while a vehicle drives in communicable area near by the hot spot 45, and connect the navigation apparatus 14 to the network 43 via the access points to communicate with the information center 62. Therefore, various kinds of information, for example, traffic information, general information, personal information, content information can be received.

When a route is searched by the route search processing means (Step S1), the controller 63 refers to the memory 64 to search for a point hi (i =1, 2, ...) that enables news distribution along the searched route (Step S2), that is, from a communicable area near by the hot spot 45 on the search route Rt. Note that the memory 64 records, for example, the coordinate indicating the position of hot spot 45, ID number, password, encrypted key and the like for accessing to the access point of the hot spot 45 as a hot spot data.

A plurality kinds of news, for example, as shown in FIG. 4, may be distributed from plural distribution stations of providers via, for example, the information center 62. A first area AR1 and a second area AR2 are defined along the length of the search route Rt as distribution areas of news. There is also formed a third area AR3 and a fourth area AR4 divided by changeover point Pc. The first area AR1, for example, is set as the news distribution area of Europe, the U.S., and Asia. The second area AR2, for example, is set as the news distribution area of Europe. In both cases, news is distributed from each distribution station in a wide area, and all area AR1 news and all area AR2 news can be downloaded at any point hi on the search route Rt. The third area AR3, however, is set, for example, as the news distribution area of France and the forth area AR4 is set as, for example, the news distribution area of Germany. In both cases (AR3, AR4), news is distributed from each distribution station in a smaller area, and French news can only be downloaded at points h1 and h2 on the search route Rt. German news can only be downloaded at points h3 and h4.

Subsequently, the controller 63 sets a predetermined point of each point hi in each news distribution area as a distribution point to download news. That is, the controller 63 sets the nearest point hi as a first distribution point (Step S3), determines whether there is a changeover point Pc for distribution area short of remaining points h2 - h4 (Step S4), and if there is a changeover point Pc (Step S4=YES), picks out a point h3 beyond the changeover point Pc (Step S5), and sets the picked out point h3 as a next distribution point (Step S6). As described above, the controller 63 sets distribution points in each distribution area zoned by the changeover point Pc.

As described above, when a route is being searched for and distribution points are selected, the server 63 may transmit, for example, route data indicating the search route Rt, map data indicating surrounding map of the search route Rt, and/or audio output data for guiding the search route Rt by the audio output unit 37, each as route guidance data indicating route guidance information, then may transmit the distribution point data indicating distribution point information to the navigation apparatus 14.

According to the present exemplary embodiment, the controller 63 can search for a route based on, for example, search data, traffic information, and/or statistical data. According to various exemplary embodiments, a route may be searched, based on only the search data. In this case, the controller 63 transmits route data indicating a search route Rt to the navigation apparatus 14 as route guidance data.

According to the present exemplary embodiment, route guidance data may be transmitted to the navigation apparatus 14, if an operator inputs a departure point Ps and a target destination Pg by operating the operation section 73 in, for example, the personal computer 61. Alternatively, route guidance data can be transmitted to the personal computer 61 and transferred to the navigation apparatus 14.

According to the present exemplary embodiment, audio output data may be transmitted from the information center 62 to the navigation apparatus 14. According to various exemplary embodiments, the audio output data may be recorded in the memory section 16 of the navigation apparatus 14 in advance. In this case, audio output data does not need to be transmitted to the navigation apparatus 14 as route guidance data.

If route guidance data and distribution point data are transmitted by the controller 63, the CPU 31 in the navigation apparatus 14 may receive the route guidance data and the distribution point data and may download the route guidance data and the distribution point data into, for example, a flash memory and record them.

Next, in order to execute route guidance, the CPU 31 may read out route guidance data from the flash memory, form a map screen on the display section 35 based on the route guidance data, indicate a current position, surrounding map, and direction of the navigation apparatus 14 on the map screen, display a search route Rt in a surrounding area of the current position, and/or notify a user of the search route Rt through a message from the audio output section 37 with voice. Accordingly, the user can drive a vehicle following the current position, surrounding map, direction of the navigation apparatus 14 (vehicle) and/or search route displayed on the map screen or notified with voice.

Note that, if the operator does not input a departure point Ps and a target destination Pg, route search processing may not be executed in the information center 62 and the controller 63 may transmit only map data to the navigation apparatus 14. Then the CPU 31 in the navigation apparatus 14 may execute display processing, form a map screen on the display section 35, and/or display a current position, a map of a surrounding region and a direction or the navigation apparatus 14 on the map screen. Further, the map data may be recorded in the memory 16 in advance without transferring the map data from the information center 62 to the navigation apparatus 14.

If the vehicle arrives at any distribution point hi while the vehicle drives along a search route Rt, it may be possible to download news distributed from plural distribution stations. For example, all area news, news of Europe, and news of France can be downloaded at the point h1, and all area news, news of Europe, and news of Germany can be downloaded at the point h3. Therefore, some of the same news may be downloaded from each distribution point along a route.

Thus, according to the present exemplary embodiment, the information center 62 can compare news distributed from each distribution station and avoid distributing identical or substantially similar news to the navigation apparatus 14.

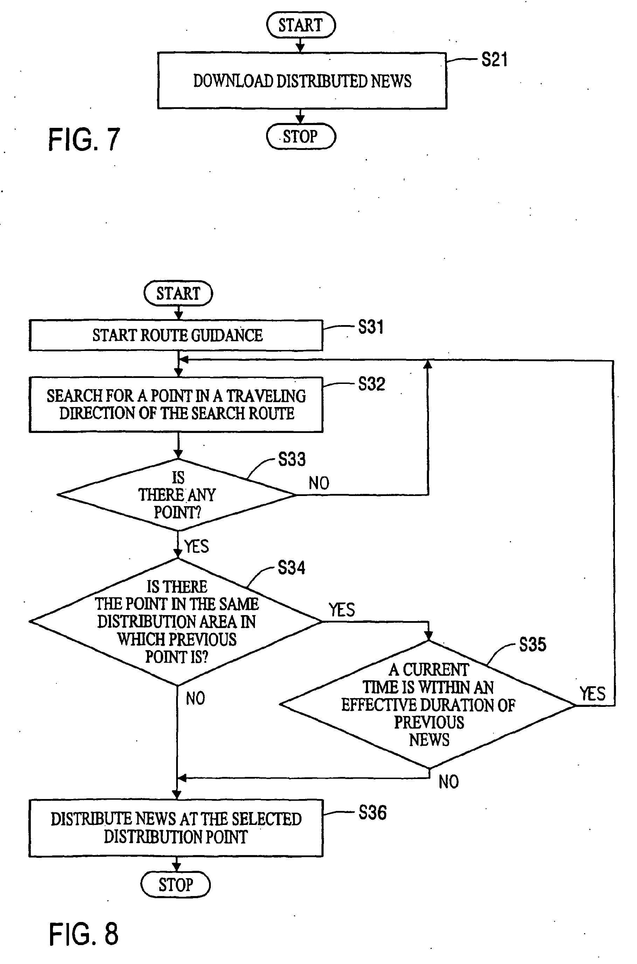

FIG. 5 is a main flow chart showing a distribution method according to the first exemplary embodiment of the invention. FIG. 6 is a diagram showing an information comparison method according to the first exemplary embodiment of the invention. FIG. 7 is a flow chart showing a reception method according to the first exemplary embodiment of the invention.

First, the controller 63 (FIG. 1) may read out a news list which contains already distributed news in form of a list from, for example, a RAM (Step S11). Subsequently, the controller 63 may compare the contents of the already distributed news and the new news to be distributed (Step S12), and execute text matching by, for example, each sentence in the news to determine whether or not the news to be newly distributed substantially corresponds with the already distributed news (Step S12-1).

Next, the controller 63 may select only that news to be distributed whose contents does not substantially correspond to the already distributed news and transmits the selected news to the navigation apparatus 14 (Step S13). Thus, as described above, it is possible to distribute only that news whose contents does not substantially correspond with any news that has been previously distributed to the navigation apparatus 14.

The CPU 31 in the navigation apparatus 14 may then receive the news distributed from the information center 62 (Step S21) and, for example, download the distributed news into a flash memory.

As described above, the distribution point is selected in each distribution area zoned by changeover point Pc (FIGs. 3 and 4). Thus, substantially the same news will not be downloaded at a plurality of distribution stations.

Further, even when all of the news at a distribution station is not substantially the same, but some news is substantially the same, the information center 62 may compare the contents of the news to be distributed with the already distributed news, and distribute only that news whose contents does not substantially correspond with the already distributed news. Thus, substantially corresponding portions of new news will not be downloaded from a plurality of distribution stations.

Although, according to the present exemplary embodiment, news content may be compared by, for example, executing text matching of each sentence, it is possible to compare, for example, parts of speech (as is the case of voice synthesizing) keywords, personal names, and/or numbers. Additionally, because an effective duration is set for news, if the effective duration for news in the news list described above is expired, news to be newly distributed may be distributed.

Next, the second exemplary embodiment of the invention will be described with reference to Fig. 8. FIG. 8 is a flow chart showing an information distribution method system according to the second exemplary embodiment of the invention. According to this exemplary embodiment the navigation apparatus 14 (FIG. 2) may be a portable terminal device as well as a vehicle on-board device and the distribution point is set after route guidance processing is started, while the vehicle drives. Thus, for the purpose of this example, it is assumed that a route has already been searched for.

When the route guidance is started (Step S31), the CPU 31 may search for a distribution point in a traveling direction of the search route Rt (Step S32). Therefore, the CPU 31 refers to the memory 16 and, for example, evaluates the stored hot spot data. The CPU 31 continuously searches for a news distribution area (communicable area of a hot spot 45 on the search route Rt) and sets that area as the distribution point hi. Note that the memory 16 may record the coordinate indicating the position of, for example, the hot spot 45, ID number, password, and/or encrypted key for accessing to the access point of the hot spot 45 as a hot spot data.

If such a point is found in the traveling direction of the search route Rt (Step S33=YES), the CPU 31 may determine whether the point is in the same distribution area as a previously selected distribution point. If the point is in the same distribution area as previous point (Step 34=YES), the CPU 31 may determine whether a current time is within an effective duration of the news downloaded from that previous point (Step S35). If the current time is within the effective duration of previous news (Step 535=YES), the point is not selected as a distribution point. If the point is not in the same distribution area as previous point (Step 534=NO) or the current time is not within the effective duration or previous news (Step 535=NO), the point is selected as a distribution point. Subsequently, the controller 63 distributes news to the navigation apparatus 14 at the set distribution point in the same manner as the first exemplary embodiment (Step S36).

As described above, if a point is in the same distribution area as a previously selected distribution point, that point is selected only if the current time is not within an effective duration of previously distributed news. Thus, substantially the same will not be distributed from a plurality of distribution stations.

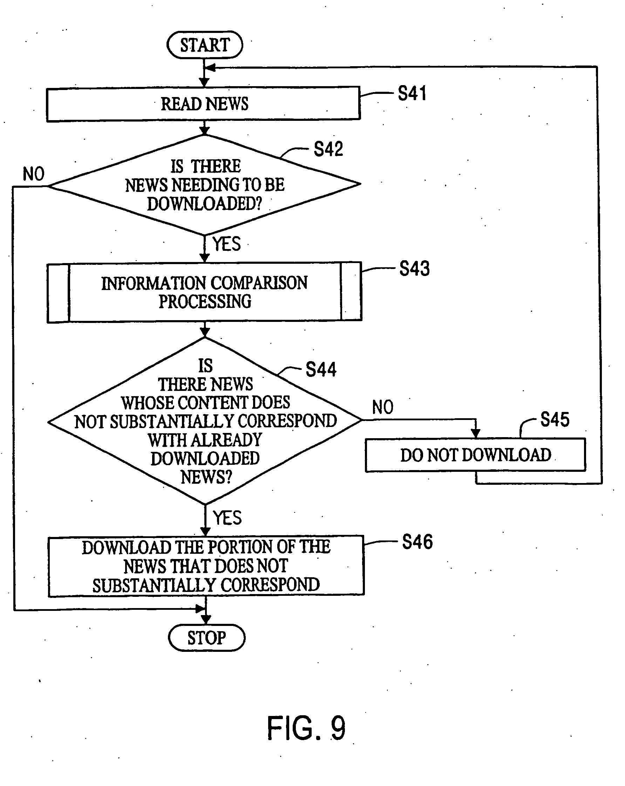

Next, the third exemplary embodiment of the invention will be described with reference to Fig. 9. FIG. 9 is a flow chart showing an information distribution method according to a third exemplary embodiment of the invention. According to this exemplary embodiment, the navigation apparatus 14 (FIG. 2) may be a portable terminal device as well as a vehicle on-board device and new news to be downloaded may be compared with already downloaded news prior to, or during, download. Thus, only new news whose content does not substantially correspond with already downloaded news.

The CPU 31 may read news (Step S41) and determine whether there is news to be downloaded (e.g., is there a distribution point in communication range with at least one different news distribution area than the previously selected distribution point) (Step S42). If there is news that needs to be downloaded, the CPU 31 compares the contents of the new news to be downloaded with the already downloaded news (Step S43), and determines whether there is already downloaded news which substantially corresponds with the new news to be downloaded (Step S44). If there is only news that substantially corresponds with new news to be downloaded (Step 544=NO), the CPU 31 does not download that news (Step S45). If there is news whose contents does not substantially correspond with already downloaded news (Step 544=YES), the CPU 31 may download the non-substantially corresponding portion of the new news (Step S46).

Note that in this case, the amount of news to be distributed may be preliminarily notified from the information center 62 (FIG.1) as an information provider to the navigation apparatus 14, and page counts such as 1/3, 2/3, 3/3... may be included.

As described above, new news to be downloaded is compared with already downloaded news and only the portion of the new news whose contents does not substantially correspond with the already downloaded news is downloaded. Thus, only new news whose content does not substantially correspond with already downloaded news is downloaded.

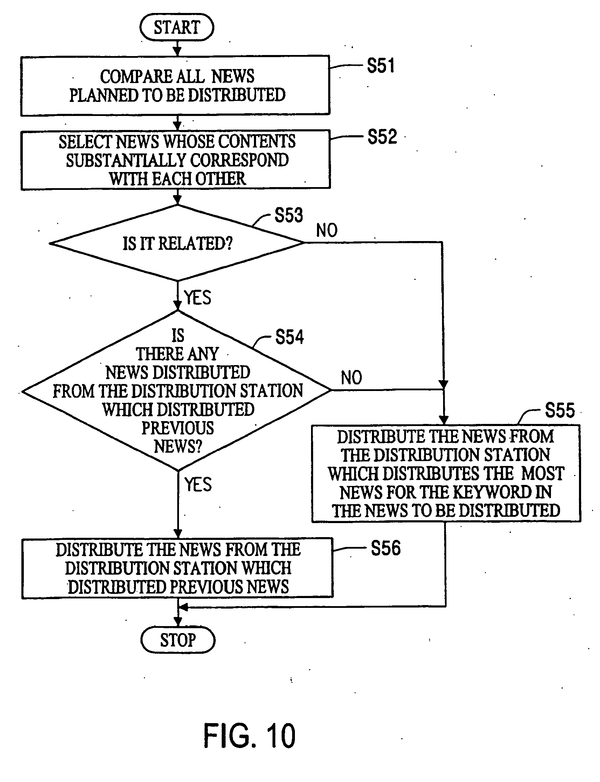

Next, the fourth exemplary embodiment of the invention will be described with reference to Fig. 10. FIG. 10 is a flow chart showing an information distribution method according to fourth exemplary embodiment of the invention. According to this exemplary embodiment, the information center 62 (FIG.1) serves as an information provider and the controller 63 compares all news to be distributed (Step S51). Subsequently, the controller 63 selects the news with substantially corresponding content (Step S52). The controller 63 then determines whether the new news to be distributed is related to already distributed news (e.g., a follow-up story) (Step S53).

For example, even if the new news to be distributed and the already distributed news share same keyword or personal name, the controller 63 determines the new news to be related, for example, if numbers following a keyword are different. For example, if the already distributed news says "Japan league is now in the top of the second inning..." and the news to be newly distributed says "Japan league is now in the bottom of the ninth inning...," the number "second" is different from "ninth" following the keyword "Japan league." Therefore, the news to be newly distributed is determined to be related.

Additionally, for example, if it is determined contents of the news to be distributed substantially corresponds with already distributed news, the new news to be distributed may be determined to be related if an effective duration of the already distributed news has expired. For example, if news which was already distributed in 9:00-15:59 says "The storm No. 10 in Okinawa is going up north..." and another news which was newly distributed in 16:00-20:59 says "The storm No.10 is now in the mainland...", the effective duration of the already distributed news may be considered expired although the number "10" following the keyword "storm" is same. Therefore, the news to be newly distributed is determined as related.

If the new news to be distributed is related (Step S53=YES), the controller 68 determines whether there is any related news distributed from the distribution station which distributed the already downloaded news (Step S54). If there is such news (Step S54-yes), news from the distribution station which distributed that the already downloaded new news is selected and distributed (Step S56).

Further, if the new news to be distributed is not related (Step S53-=NO), the controller 63 distributes that new news from a distribution station which distributes the most news for a keyword within that new news (Step S55). Note that, alternatively, if the new news to be distributed is not related, it is also possible to select a distribution station which has a small news distribution area or select a distribution station with the news of the greatest length (e.g., more detailed).

As described above, if there is news whose contents substantially corresponds with any of a plurality of new news to be distributed, the new news from a same distribution station is selected if that news is related. When the news is not related, new news may be selected from the distribution station which distributes, for example, many number of similar news, news from the distribution station which has small news distribution area, and/or news with great length. Thus, news with substantially corresponding content will less likely be downloaded from different distribution stations.

While various features of this invention have been described in conjunction with the exemplary embodiments outlined above, various alternatives, modifications, variations and/or improvements of those features may be possible. Accordingly, the exemplary embodiments of the invention, as set forth above, are intended to be illustrative. Various changes may be made without departing from the scope of the invention as defined in the claims.

As described above, an information distribution apparatus searches for a route based on a predetermined search condition. The information distribution apparatus selects an information distribution point **(h1, h2, h3, h4)** on the searched route based on an information distribution area **(AR3, AR4),** compares information to be distributed, and selects information to be distributed based on the result of the comparison.

## Claims

1. An information distribution apparatus, comprising:
a controller **(63)** that is adapted to:
search for a route **(Rt)** based on a predetermined search condition;
**characterized in that**
the controller (63) is further adapted to
select an information distribution point **(h1, h2, h3, h4)** on the searched route based on an information distribution area (AR1, AR2, AR3, AR4); wherein the information distribution point is a point from which information can be downloaded;
compare information to be distributed from the selected information distribution point to a navigation apparatus with information that has already been distributed; and
select information to be distributed from the selected information distribution point to the navigation apparatus based on the result of the comparison.

2. The information distribution apparatus of claim 1, **characterized in that** the controller is adapted to select a distribution point in each information distribution area before route guidance processing is started, each distribution area defined by a changeover point **(Pc).**

3. The information distribution apparatus of claim 2, **characterized in that** the changeover point is a point at which at least one information distribution area change or becomes available.

4. The information distribution apparatus of claim 1, **characterized in that** the controller is adapted to, after route guidance is started, select an information distribution point that is not in the same information distribution area as a previous information distribution point.

5. The information distribution apparatus of claim 4, **characterized in that** the controller is adapted to, if an effective duration of information already distributed is expired, select an information distribution point that is in the same distribution area as a previous distribution point.

6. The information distribution apparatus of claim 1, **characterized in that** the controller is adapted to compare the contents of the information to be distributed before that information is distributed.

7. An information center comprising the information distribution apparatus of claim 1.

8. The information center of claim 7, wherein the information center **(62)** is adapted to transmit the selected information to the navigation apparatus (14).

9. A navigation apparatus comprising the information distribution apparatus of claim 1, wherein the navigation apparatus is the navigation apparatus to which information is distributed.

10. The navigation apparatus of claim 9, wherein the navigation apparatus **(14)** is an on-board device.

11. The navigation apparatus of claim 9, wherein the navigation apparatus is a portable device.

12. A method for information distribution, comprising:
searching **(S1)** for a route **(Rt)** based on a predetermined search condition;
**characterized by**
selecting **(S2, S3)** an information distribution point **(h1, h2, h3, h4)** on the searched route based on an information distribution area **(AR1 AR2, AR3, AR4);** wherein the information distribution point is a point from which information can be downloaded;
comparing (S12) information to be distributed from the selected information distribution point to a navigation apparatus with information that has already been distributed; and
selecting information **(S13)** to be distributed from the selected information distribution point to the navigation apparatus based on the comparison.

13. The method for information distribution of claim 12, **characterized in that** selecting an information distribution point on the searched route based on an information distribution area comprises selecting an information distribution point in each information distribution area before route guidance processing is started, each information distribution area defined by a changeover point **(Pc).**

14. The method for information distribution of claim 13, **characterized in that** the changeover point (Pc) is a point at which at least one information distribution area changes or becomes available.

15. The method for information distribution of claim 12, **characterized in that** selecting an information distribution point on the searched route based on an information distribution area comprises selecting **(S34),** if route guidance is started, an information distribution point that is not in the same information distribution area as a previous information distribution point.

16. The method for information distribution of claim 15, **characterized in that** selecting an information distribution point on the searched route based on an information distribution area further comprises selecting (**S35**), if an effective duration of information already distributed is expired, an information distribution point that is in a same information distribution area as a previous information distribution point.

17. The method for information distribution of claim 12, **characterized in that** comparing information to be distributed comprises comparing **(S43)** the contents of the information to be distributed before the information is distributed.

18. A storage medium storing a set of program instructions executable on a data processing device and usable for performing the method recited in claim 12.

## Patentansprüche

1. Informationsverteilungsvorrichtung, mit:
einer Steuerung (63), die eingerichtet ist zum:
Suchen einer Route (Rt) basierend auf einer vorbestimmten Suchbedingung;
**dadurch gekennzeichnet, dass**
die Steuerung (63) weiterhin eingerichtet ist zum
Auswählen eines Informationsverteilungspunktes (h1, h2, h3, h4) auf der gesuchten Route, basierend auf einem Informationsverteilungsbereich (AR1, AR2, AR3, AR4); wobei der Informationsverteilungspunkt ein Punkt ist, von dem Informationen heruntergeladen werden können;
Vergleichen von Informationen, die von dem ausgewählten Informationsverteilungspunkt zu einer Navigationsvorrichtung zu verteilen sind, mit Informationen, die bereits verteilt wurden; und
Auswählen von Informationen, die von dem ausgewählten Informationsverteilungspunkt zu der Navigationsvorrichtung zu verteilen sind, basierend auf dem Ergebnis des Vergleichs.

2. Informationsverteilungsvorrichtung gemäß Anspruch 1, **dadurch gekennzeichnet, dass** die Steuerung eingerichtet ist, um einen Verteilungspunkt in jedem Informationsverteilungsbereich auszuwählen, bevor eine Routenführungsverarbeitung gestartet wird, wobei jeder Verteilungsbereich durch einen Übergangspunkt (Pc) definiert ist.

3. Informationsverteilungsvorrichtung gemäß Anspruch 2, **dadurch gekennzeichnet, dass** der Übergangspunkt ein Punkt ist, an dem sich mindestens ein Informationsverteilungsbereich ändert oder verfügbar wird.

4. Informationsverteilungsvorrichtung gemäß Anspruch 1, **dadurch gekennzeichnet, dass** die Steuerung eingerichtet ist, nachdem die Routenführung gestartet ist, einen Informationsverteilungspunkt auszuwählen, der sich nicht in demselben Informationsverteilungsbereich befindet, wie ein vorhergehender Informationsverteilungspunkt.

5. Informationsverteilungsvorrichtung gemäß Anspruch 4, **dadurch gekennzeichnet, dass** die Steuerung eingerichtet ist, wenn eine effektive Dauer von bereits verteilten Informationen abgelaufen ist, einen Informationsverteilungspunkt auszuwählen, der sich in demselben Informationsverteilungsbereich wie ein vorhergehender Verteilungspunkt befindet.

6. Informationsverteilungsvorrichtung gemäß Anspruch 1, **dadurch gekennzeichnet, dass** die Steuerung eingerichtet ist, die Inhalte der zu verteilenden Informationen zu vergleichen, bevor diese Informationen verteilt werden.

7. Informationszentrum, das die Informationsverteilungsvorrichtung gemäß Anspruch 1 aufweist.

8. Informationszentrum gemäß Anspruch 7, wobei das Informationszentrum (62) eingerichtet ist, die ausgewählten Informationen an die Navigationsvorrichtung (14) zu übermitteln.

9. Navigationsvorrichtung, die die Informationsverteilungsvorrichtung gemäß Anspruch 1 aufweist, wobei die Navigationsvorrichtung die Navigationsvorrichtung ist, an die die Informationen verteilt werden.

10. Navigationsvorrichtung gemäß Anspruch 9, wobei die Navigationsvorrichtung (14) eine fahrzeuginterne Einrichtung ist.

11. Navigationsvorrichtung gemäß Anspruch 9, wobei die Navigationsvorrichtung eine tragbare Einrichtung ist.

12. Verfahren zur Informationsverteilung mit:
Suchen (S1) einer Route (Rt) basierend auf einer vorbestimmten Suchbedingung;
**gekennzeichnet durch**
Auswählen (S2, S3) eines Informationsverteilungspunktes (h1, h2, h3, h4) auf der gesuchten Route, basierend auf einem Informationsverteilungsbereich (AR1, AR2, AR3, AR4); wobei der Informationsverteilungspunkt ein Punkt ist, von dem Informationen heruntergeladen werden können;
Vergleichen (S12) von Informationen, die von dem ausgewählten Informationsverteilungspunkt zu einer Navigationsvorrichtung zu verteilen sind, mit Informationen, die bereits verteilt wurden; und
Auswählen von Informationen (S13), die von dem ausgewählten Informationsverteilungspunkt zu der Navigationsvorrichtung zu verteilen sind, basierend auf dem Vergleich.

13. Verfahren zur Informationsverteilung gemäß Anspruch 12, **dadurch gekennzeichnet, dass** das Auswählen eines Informationsverteilungspunktes auf der gesuchten Route, basierend auf einem Informationsverteilungsbereich, ein Auswählen eines Informationsverteilungspunktes in jedem Informationsverteilungsbereich aufweist, bevor eine Routenführungsverarbeitung gestartet wird, wobei jeder Informationsverteilungsbereich durch einen Übergangspunkt (Pc) definiert ist.

14. Verfahren zur Informationsverteilung gemäß Anspruch 13, **dadurch gekennzeichnet, dass** der Übergangspunkt (Pc) ein Punkt ist, an dem sich mindestens ein Informationsverteilungsbereich ändert oder verfügbar wird.

15. Verfahren zur Informationsverteilung gemäß Anspruch 12, **dadurch gekennzeichnet, dass** das Auswählen eines Informationsverteilungspunktes auf der gesuchten Route, basierend auf einem Informationsverteilungsbereich, ein Auswählen (S34) eines Informationsverteilungspunktes, der sich nicht in demselben Informationsverteilungsbereich befindet, wie ein vorhergehender Informationsverteilungspunkt, aufweist, wenn die Routenführung gestartet ist.

16. Verfahren zur Informationsverteilung gemäß Anspruch 15, **dadurch gekennzeichnet, dass** das Auswählen eines Informationsverteilungspunktes auf der gesuchten Route, basierend auf einem Informationsverteilungsbereich, weiterhin ein Auswählen (S35) eines Informationsverteilungspunktes beinhaltet, wenn eine effektive Dauer von bereits verteilten Informationen abgelaufen ist, der sich in demselben Informationsverteilungsbereich wie ein vorhergehender Informationsverteilungspunkt befindet.

17. Verfahren zur Informationsverteilung gemäß Anspruch 12, **dadurch gekennzeichnet, dass** das Vergleichen von zu verteilenden Informationen ein Vergleichen (S43) der Inhalte der zu verteilenden Informationen aufweist, bevor die Informationen verteilt werden.

18. Speichermedium, das eine Sammlung von Programminstruktionen speichert, die auf einer Datenverarbeitungseinrichtung ausführbar, und zum Durchführen des in Anspruch 12 dargestellten Verfahrens verwendbar sind.

## Revendications

1. Appareil de distribution d'informations, comprenant :
un contrôleur (63) qui est adapté pour :
rechercher une route (Rt) sur la base d'une condition de recherche prédéterminée ;
**caractérisé en ce que**
le contrôleur (63) est en outre adapté pour
sélectionner un point de distribution d'informations (**h1, h2, h3, h4**) sur la route recherchée sur la base d'une zone de distribution d'informations **(AR1, AR2, AR3, AR4) ;** dans lequel le point de distribution d'informations est un point à partir duquel les informations peuvent être téléchargées ;
comparer les informations devant être distribuées à partir du point de distribution d'informations sélectionné à un appareil de navigation aux informations qui ont déjà été distribuées ; et
sélectionner les informations devant être distribuées à partir du point de distribution d'informations sélectionné à l'appareil de navigation sur la base du résultat de la comparaison.

2. Appareil de distribution d'informations selon la revendication 1, **caractérisé en ce que** le contrôleur est adapté pour sélectionner un point de distribution dans chaque zone de distribution d'informations avant que le traitement de guidage routier ne commence, chaque zone de distribution définie par un point de changement (Pc).

3. Appareil de distribution d'informations selon la revendication 2, **caractérisé en ce que** le point de changement est un point auquel au moins une zone de distribution d'informations change ou devient disponible.

4. Appareil de distribution d'informations selon la revendication 1, **caractérisé en ce que** le contrôleur est adapté, après que le guidage routier soit commencé, pour sélectionner un point de distribution d'informations qui n'est pas dans la même zone de distribution d'informations qu'un point de distribution d'informations précédent.

5. Appareil de distribution d'informations selon la revendication 4, **caractérisé en ce que** le contrôleur est adapté, si une durée effective des informations déjà distribuées a expiré, pour sélectionner un point de distribution d'informations qui est dans la même zone de distribution qu'un point de distribution précédent.

6. Appareil de distribution d'informations selon la revendication 1, **caractérisé en ce que** le contrôleur est adapté pour comparer les contenus des informations devant être distribuées avant que les informations ne soient distribuées.

7. Centre d'informations comprenant l'appareil de distribution d'informations de la revendication 1.

8. Centre d'informations selon la revendication 7, dans lequel le centre d'informations (62) est adapté pour transmettre les informations sélectionnées à l'appareil de navigation (14).

9. Appareil de navigation comprenant l'appareil de distribution d'informations de la revendication 1, dans lequel l'appareil de navigation est l'appareil de navigation auquel les informations sont distribuées.

10. Appareil de navigation selon la revendication 9, dans lequel l'appareil de navigation (14) est un dispositif de bord.

11. Appareil de navigation selon la revendication 9, dans lequel l'appareil de navigation est un dispositif portable.

12. Procédé pour une distribution d'informations, comprenant :
la recherche **(S1)** d'une route **(Rt)** sur la base d'une condition de recherche prédéterminée ;
**caractérisé par**
sélectionner **(S2, S3)** un point de distribution d'informations **(h1, h2, h3, h4)** sur la route recherchée sur la base d'une zone de distribution d'informations **(AR1, AR2, AR3, AR4)** ; dans lequel le point de distribution d'informations est un point à partir duquel les informations peuvent être téléchargées ;
comparer **(S12)** les informations devant être distribuées à partir du point de distribution d'informations sélectionné à un appareil de navigation aux informations qui ont déjà été distribuées ; et
sélectionner les informations **(S13)** devant être distribuées à partir du point de distribution d'informations sélectionné à l'appareil de navigation sur la base de la comparaison.

13. Procédé destiné à une distribution d'informations selon la revendication 12, **caractérisé en ce que** sélectionner un point de distribution d'informations sur la route recherchée sur la base d'une zone de distribution d'informations comprend la sélection d'un point de distribution dans chaque zone de distribution d'informations avant que le traitement de guidage routier ne commence, chaque zone de distribution d'informations définie par un point de changement (Pc).

14. Procédé destiné à une distribution d'informations selon la revendication 13, **caractérisé en ce que** le point de changement (Pc) est un point auquel au moins une zone de distribution d'informations change ou devient disponible.

15. Procédé destiné à une distribution d'informations selon la revendication 12, **caractérisé en ce que** sélectionner un point de distribution d'informations sur la route recherchée sur la base d'une zone de distribution d'informations comprend la sélection (S34), si un guidage routier est commencé, d'un point de distribution d'informations qui n'est pas dans la même zone de distribution d'informations qu'un point de distribution d'informations précédent.

16. Procédé destiné à une distribution d'informations selon la revendication 15, **caractérisé en ce que** la sélection d'un point de distribution d'informations sur la route recherchée sur la base d'une zone de distribution d'informations comprend en outre la sélection (S35), si une durée effective des informations déjà distribuées a expiré, d'un point de distribution d'informations qui est dans une même zone de distribution d'informations qu'un point de distribution d'informations précédent.

17. Procédé destiné à une distribution d'informations selon la revendication 12, **caractérisé en ce que** la comparaison des informations devant être distribuées comprend la comparaison (S43) des contenus des informations devant être distribuées avant que les informations ne soient distribuées.

18. Support de stockage stockant une série d'instructions de programme exécutables sur un dispositif de traitement de données et utilisables pour exécuter le procédé exposé dans la revendication 12.
